# EUROPÄISCHE PATENTSCHRIFT

(11) **EP 3 234 313 B1**
(45) Veröffentlichungstag und Bekanntmachung des Hinweises auf die Patenterteilung: **31.10.2018**
(21) Anmeldenummer: 15816730.4
(22) Anmeldetag: 16.12.2015
(51) Int. Cl.: F01M 5/00, F01M 11/00, F28D 9/00, F28F 9/007, F28D 21/00

(54) **ÖLKÜHLER FÜR EIN ÖLFILTERMODUL EINES KRAFTFAHRZEUGS**
OIL COOLER FOR AN OIL FILTER MODULE OF A MOTOR VEHICLE
REFROIDISSEUR D'HUILE POUR UN MODULE DE FILTRE À HUILE D'UN VÉHICULE AUTOMOBILE

(30) Priorität: 19.12.2014 DE 102014226671
(43) Veröffentlichungstag der Anmeldung: 25.10.2017
(73) Patentinhaber: Mahle International GmbH, 70376 Stuttgart (DE)
(72) Erfinder: KIEMLEN, Ralf, 72760 Reutlingen (DE); SCHMIDGALL, Stefan, 70378 Stuttgart (DE)
(74) Vertreter: BRP Renaud & Partner mbB Rechtsanwälte Patentanwälte Steuerberater
(86) Internationale Anmeldenummer: PCT/EP2015/079950
(87) Internationale Veröffentlichungsnummer: WO 2016/096957

(56) Entgegenhaltungen:
- EP-A2- 1 522 811
- EP-A2- 2 267 390
- DE-A1- 4 125 079
- DE-A1-102005 002 063
- DE-A1-102011 053 564
- DE-U1- 9 309 741

## Beschreibung

Die Erfindung betrifft einen Ölkühler für ein Ölfiltermodul eines Kraftfahrzeugs sowie ein Ölfiltermodul mit einem solchen Ölkühler.

Bei der Entwicklung moderner Kraftfahrzeugen ist seit vielen Jahren die Tendenz zu beobachten, deren Komponenten möglichst leichtgewichtig zu gestalten, um das gesamte Eigengewicht des Kraftfahrzeugs - primär zur Senkung des Kraftstoffverbrauchs der das Fahrzeug antreibenden Brennkraftmaschine - zu senken.

Dies gilt auch für eine mit der Brennkraftmaschine zusammenwirkende Ölfiltereinrichtung mit integriertem Ölkühler. Unter dem Begriff Motoröl- Ölfiltereinrichtung sei vorliegend jedwede Einrichtung gefasst, die zum Entfernen von Schmutzpartikeln aus Motoröl dienen kann, welches zur Schmierung der Brennkraftmaschine verwendet wird. Neben der Verwendung als Schmiermittel wird besagtes Motoröl auch als Kühlmittel für betriebsmäßig hoch belastete Komponenten der Brennkraftmaschine wie etwa dem im Zylinder der Brennkraftmaschine verstellbaren Kolben benutzt. Ein Motorölkühler basiert daher auf dem Wirkprinzip eines Wärmetauschers und kann als solcher Teil eines im Motorraum des Kraftfahrzeugs installierten, herkömmlichen Kühlmittelkreislaufs sein. Fertigungsbedingt werden Ölfiltermodul und Motorölkühler dabei typischerweise als separate Bauteile gefertigt und erst bei der Endmontage im Motorraum des Kraftfahrzeugs aneinander befestigt.

Als problematisch bei herkömmlichen Motorölkühlern erweist sich deren mechanisch stabile Befestigung am Ölfiltermodul. Bei herkömmlichen Motorölkühlern erfolgt deren Montage - etwa an einer am Ölfiltermodul vorhandenen Befestigungsplatte - mittels an der Kühlvorrichtung des Motorölkühlers außenanliegender Schraubverbindungen. Eine derartige Befestigungstechnik ist etwa in dem in der WO 2012/061928 A1 beschriebenen Ölkühler realisiert. Eine solche Befestigungstechnik führt typischerweise zu einer hohen Biegebelastung der Befestigungsplatte, so dass diese mit einer hinreichend großen Plattendicke versehen werden muss, um zu verhindern, dass sie infolge der wirkenden Biegekräfte bei Übersteigen der Elastizitätsgrenze in unerwünschter Weise deformiert wird oder gar bricht. Da besagte Plattendicke der Befestigungsplatte jedoch direkt mit deren Eigengewicht skaliert, ist eine derartige Erhöhung der mechanischen Steifigkeit der Befestigungsplatte mit einer unerwünschten Gewichtszunahme verbunden.

Die DE10 2005 002 063 A1 beschreibt einen Ölkühler gemäss dem Oberbegriff des Anspruchs 1. Die oben beschriebenen Probleme bei der Befestigung eines Ölkühlers ergeben sich nicht nur beim vorangehend exemplarisch beschriebenen Motorölkühler, sondern bei jedweden Ölkühlern, also etwa auch bei Getriebeölkühlern.
Es ist daher eine Aufgabe der vorliegenden Erfindung, einen verbesserten Ölkühler zu schaffen, welcher sich durch einen leichtgewichtige Aufbau und dennoch mechanisch stabile Befestigbarkeit an einem anderen Bauteil, insbesondere einem Ölfiltermodul, auszeichnet. Der Erfindung liegt ferner die Aufgabe zugrunde, ein Ölfiltermodul mit einem solchen Ölkühler anzugeben.
Die genannten Aufgaben werden durch den Gegenstand der unabhängigen Patentansprüche gelöst. Bevorzugte Ausführungsformen sind Gegenstand der abhängigen Patentansprüche.
Grundgedanke der Erfindung ist demnach, einen Ölkühler mit mehreren entlang einer Stapelrichtung aufeinandergestapelten Platten in einer ersten Platte, welche den Ölkühler entlang der Stapelrichtung begrenzt, mit wenigstens einer Durchgangsöffnung auszustatten. Diese wenigstens eine Durchgangsöffnung dient zur Aufnahme eines Befestigungselements, beispielsweise einer Schraube o.ä., mittels welchem die erste Platte an einer Montagewand eines Ölfiltermoduls oder eines anderen, nicht zum Ölkühler gehörigen Bauteils, befestigt werden kann. Die Bereitstellung einer Durchgangsöffnung direkt an der ersten Platte des Ölkühlers bedeutet, dass keine separaten Montageplatten o.ä. - wie bei herkömmlichen Ölkühlern üblich - erforderlich sind, um den Ölkühler mit Hilfe einer Schraubverbindung o.ä. am Ölfiltermodul zu fixieren. Vielmehr ist beim hier vorgestellten Ölkühler die wenigstens eine Durchgangsöffnung - als wesentlicher Teil einer Befestigungseinrichtung zum Befestigen des Ölkühlers am Ölfiltermodul - direkt im Plattenstapel des Ölkühlers integriert. Dies erlaubt einen vereinfachten Aufbau des Ölkühlers, wodurch Kostenvorteile bei der Herstellung erzielt werden können. Der Verzicht auf eine zusätzliche Montageplatte als Teil des Ölkühlers führt auch zu einer Reduzierung des für den Ölkühler in einem Kraftfahrzeug erforderlichen Bauraums. Dies gilt insbesondere in Stapelrichtung des Ölkühlers. Auch das Eigengewicht des Ölkühler kann in nicht unerheblichem Maße reduziert werden.

In einer bevorzugten Ausführungsform können wenigstens vier Durchgangsöffnungen, jeweils zur Aufnahme eines Befestigungselements ausgebildet, in der ersten Platte vorgesehen sein. Prinzipiell kann die Anzahl der bereitgestellten Durchgangsöffnung an verschiedene konstruktive Faktoren wie beispielsweise die Flächengröße der ersten Platte, die Steifigkeit der einzelnen Platten des Ölkühlers oder das Eigengewicht des gesamten Ölkühlers angepasst werden, um eine optimierte Befestigung des Ölkühler am Ölfiltermodul oder einer anderen Komponenten eines Kraftfahrzeugs zu gewährleisten. Um den Bauraumbedarf für den Ölkühler möglichst klein zu halten, erweist es sich als vorteilhaft, die erste Platte und wenigstens die der ersten Platte in Stapelrichtung benachbarte zweite Platte, insbesondere alle zweiten Platten, im Wesentlichen mit dieselben äußeren Abmessungen zu versehen.

Eine flächige und besonders gleichmäßige Befestigung des Ölkühlers an einer Montagewand lässt sich erzielen, indem auf der ersten Platte wenigstens zwei Durchgangsöffnungen - bezüglich einer Draufsicht auf eine der zweiten Platte zugewandte Oberseite der ersten Platte - im Wesentlichen geradlinig entlang einer durch eine Längsseite der ersten Platte definierten Längsrichtung angeordnet werden. Bei dieser bevorzugten Ausführungsform sind zwei weitere Durchgangsöffnungen bezüglich besagter Draufsicht auf die Oberseite der ersten Platte im Wesentlichen geradlinig entlang einer quer zur Längsrichtung verlaufenden Querrichtung angeordnet. "Im Wesentlichen" bedeutet hier, dass die tatsächliche Position der Durchgangsöffnungen um wenige Millimeter, vorzugsweise höchstens um 3 Millimeter, höchst vorzugsweise höchstens um 1 Millimeter, von einer geraden Linie abweichen dürfen. Eine derartige Anordnungsgeometrie führt zu einer besonders gleichmäßigen Verteilung der Durchgangsöfffnungen und somit der Befestigungspunkte der ersten Platte an der Montagewand, was einer flächigen Anlage der ersten Platte an die Montagewand förderlich ist.

In einer weiteren bevorzugten Ausführungsform sind auf der ersten Platte des Ölkühlers wenigstens fünf, insbesondere genau fünf, Durchgangsöffnungen vorgesehen. Bei dieser Ausführungsform sind wenigstens drei der fünf Durchgansöffnungen geradlinig entlang der Längsrichtung und drei der fünf Durchgangsöffnungen geradlinig entlang der Querrichtung angeordnet. Auch eine solche Anordnungsgeometrie führt zu einer vorteilhaften Verteilung der Befestigungspunkte über die erste Platte.

In einer anderen bevorzugten Ausführungsform weist die erste Platte eine Plattendicke auf, die größer ist als eine Plattendicke der wenigstens einen zweiten Platte. Auf diese Weise kann die Steifigkeit des gesamten Ölkühlers verbessert werden, ohne dass sich das Eigengewicht des gesamten Ölkühlers maßgeblich erhöht.

Besonders zweckmäßig kann die erste Platte bezüglich der Draufsicht auf die der benachbarten, zweiten Platte zugewandte Oberseite der ersten Platte im Wesentlichen rechteckförmig mit einer ersten und einer zweiten Symmetrieachse ausgebildet sein. Bei dieser bevorzugten Ausführungsform sind die Durchgangsöffnungen auf der ersten und/oder auf der zweiten Symmetrieachse angeordnet. Es ergibt sich ein hochsymmetrischer Aufbau mit zwei orthogonal zueinander verlaufenden Symmetrieachsen, welcher eine besonders stabile Fixierung der ersten Platte des Ölkühlers an der Montagewand erlaubt. Vom Begriff "im Wesentlichen rechteckförmig" seien vorliegend auch rechteckige Platten mit abgerundeten Ecken ausdrücklich umfasst.

Besonders bevorzugt ist bei einer vorteilhaften Weiterbildung eine der Durchgangsöffnungen auf dem Schnittpunkt der beiden Symmetrieachsen angeordnet. Dies bedeutet, in Draufsicht auf die Oberseite der ersten Platte ergibt sich eine kreuzartige Anordnungsgeometrie der Durchgangsöffnungen. Die im Symmetrieachsen-Schnittpunkt angeordnete Durchgangsöffnung ermöglicht eine Befestigung der ersten Platte an der Montagewand in einem zentralen Bereich. Durch diese Maßnahme kann die mechanische Stabilität der Befestigung gegenüber den vorangehend erläuterten Ausführungsformen nochmals erhöht werden.

In einer anderen bevorzugten Ausführungsform sind in der ersten Platte ein als Durchgangsöffnung ausgebildeter Fluideinlass und ein als Durchgangsöffnung ausgebildeter Fluidauslass für ein erstes Fluid angeordnet. Der Fluideinlass und der Fluidauslass verbinden also einen zwischen der ersten Platte und der der ersten Platte in Stapelrichtung benachbarten, zweiten Platte ausgebildeten ersten Fluidkanal fluidisch mit der Umgebung des Ölkühlers. Durch den Fluideinlass kann somit ein erstes Fluid, beispielsweise das vom Ölkühler zu kühlende Öl, in den von der ersten Platte und der der ersten Platte benachbarten zweiten Platte begrenzten Fluidkanal eingeleitet werden. Im ersten Fluidkanal kann das Öl thermisch mit einem in einem zweiten Fluidkanal bereitgestellten zweiten Fluid, etwa einem Kühlmittel, wechselwirken und auf diese Weise abgekühlt werden. Nach einer solchen thermischen Wechselwirkung durch den Fluidauslass wieder aus dem ersten Fluidkanal ausgeleitet werden. Besagter zweiter Fluidkanal kann dabei von den beiden in Stapelrichtung der ersten Platte benachbarten beiden zweiten Platten begrenzt werden. Zum Ein- und Ausleiten des zweiten Fluids in den zweiten Fluidkanal können in der ersten Platte ein als Durchgangsöffnung ausgebildeter zweiter Fluideinlass sowie ein als Durchgangsöffnung ausgebildeter zweiter Fluidauslass für ein zweites Fluid vorgesehen sein. Der zweite Fluideinlass und der zweite Fluidauslass sind in dieser Ausführungsform derart auszubilden, dass sie den zweiten Fluidkanal fluidisch mit der Umgebung des Ölkühlers verbinden. Diesbezüglich eröffnen sich dem Fachmann vielfältige konstruktive Optionen. Denkbar ist etwa die Anordnung von herkömmlichen, einander zugewandten Domen in der ersten sowie in der der ersten Platte benachbarten zweiten Platte, in welchen jeweils Durchgangsöffnungen vorgesehen sein können. Auf diese Weise kann der zweite Fluidkanal fluidisch unter Überbrückung des ersten Fluidkanals mit der äußeren Umgebung des Ölkühlers verbunden werden. Dem Fachmann ist in diesem Zusammenhang geläufig, dass in einer alternativen Variante das zu kühlende Öl in den zweiten Fluidkanal und das Kühlmittel in den ersten Fluidkanal eingebracht werden kann. In einer weiteren, alternativen Variante der vorangehend erläuterten Ausführungsform können die Fluideinlässe bzw. Fluidauslässe aber auch ein einer in Stapelrichtung der ersten Platte gegenüberliegenden zweiten Platte vorgesehen werden. Dem Fachmann eröffnen sich vielfältige Variationsmöglichkeiten, unter welchen er unter konstruktiven Gesichtspunkten auswählen kann.

Besonders zweckmäßig können die beiden die Fluideinlässe bildenden Durchgangsöffnungen und die beiden die Fluidauslässe Durchgangsöffnungen in Draufsicht auf die Oberseite der ersten Platte in den Eckpunkten eines virtuellen Rechtecks angeordnet sein. Auf diese Weise wird vermieden, dass die an der Position der Fluideinlässe bzw. Fluidauslässe zwangsläufig lokal auftretende Minderung der Steifigkeit der ersten Platte gebündelt in einem bestimmten Bereich der ersten Platte auftritt.

Besonders zweckmäßig kann das virtuelle Rechteck derart auf der Oberseite der ersten Platte angeordnet sein, dass auf einer virtuellen Verbindungslinie zwischen zwei Durchgangsöffnungen, die einen Fluideinlass oder einen Fluidauslass ausbilden, keine Durchgangsöffnung angeordnet ist, die zur Aufnahme eines Befestigungselements dient. Diese Maßnahme bewirkt eine verbesserte Steifigkeit des Aufbaus.

In einer weiteren bevorzugten Ausführungsform sind die Durchgangsöffnungen, die zur Aufnahme eines Befestigungselements ausgebildet sind, bezüglich einer virtuellen Verbindungslinie zwischen zwei benachbarten, einen Fluideinlass oder einen Fluidauslass ausbildenden Durchgangsöffnungen, nach außen, zum Rand der ersten Platte hin, versetzt angeordnet. Mit anderen Worten, die Befestigungspunkte sind nicht auf einer geradlinigen Linie mit zwei benachbarten, einen Fluideinlass oder Fluidauslass ausbildenden Durchgangsöffnungen angeordnet. Auf diese Weise kann eine verbesserte Kraftverteilung der in den Ölkühler beim Fixieren an der Montagewand eingeleiteten Kräfte erreicht werden. Zusätzlich wird eine verbesserte Abdichtung der Fluideinlässe und Fluidauslässe erzielt.

Sollen als Befestigungselemente Schraubelemente verwendet werden, so erweist es sich als vorteilhaft, Durchgangsöffnungen, die zur Aufnahme eines Befestigungselements ausgebildet sind, mit einem jeweiligen Innengewinde auszustatten. In diese Innengewinde kann dann das komplementäre Außengewinde eines jeweiligen Schraubelements eingeschraubt werden. Auf diese Weise wird eine zuverlässige Fixierung der Schraubelemente in den Durchgangsöffnungen erreicht, bevor mit diesen die eigentliche Befestigung der ersten Platte des Ölkühlers an der Montagewand des Ölfiltermoduls erfolgt. Wird hingegen auf die Bereitstellung eines Innengewindes in den Durchgangsöffnungen verzichtet, so ist es denkbar, die Befestigungselemente mittels einer Klebverbindung in den Durchgangsöffnungen zu fixieren. Auf diese Weise kann der zwischen der ersten Platte und der der ersten Platte benachbarten, zweiten Platte ausgebildete erste Fluidkanal gegen die äußere Umgebung des Ölkühlers abgedichtet werden. Es versteht sich, dass eine solche Klebverbindung auch mit Schraubelementen kombiniert werden kann.

Besonders zweckmäßig werden die zur Aufnahme eines Befestigungselements ausgebildeten Durchgangsöffnungen mit einem kleineren Öffnungsdurchmesser versehen als die die Fluideinlässe bzw. Fluidauslässe ausbildenden Durchgangsöffnungen. Auf diese Weise können eine Vielzahl von Durchgangsöffnungen zur Aufnahme von Befestigungselementen und somit eine Vielzahl von Befestigungspunkte realisiert werden, ohne dass dies mit einem übermäßigen Bedarf an Bauraum einherginge.

In einer anderen bevorzugten Ausführungsform kann jede Platte jeweils einen Plattenboden aufweisen. Im Falle der ersten Platte sind in diesem Plattenboden die Durchgangsöffnungen zur Aufnahme von Befestigungselementen angeordnet. Der Plattenboden wird durch einen den Plattenboden einfassenden Plattenkragen, der vom Plattenboden zur benachbarten Platte hin absteht, zur Platte komplettiert. Wenigstens ein Plattenkragen der den Ölkühler bildenden Platten, vorzugsweise jeder dieser Plattenkrägen, kann stoffschlüssig, insbesondere mittels einer Lötverbindung, mit der ihm benachbarten Platte verbunden sein. Auf diese Weise kann ein Ölkühler in Flachbauweise und mit hoher mechanischer Festigkeit realisiert werden.

In einer vorteilhaften Weiterbildung der vorangehend erläuterten Ausführungsform ist das Befestigungselement ein Schraubelement mit einem Schraubenbolzen, der ein Außengewinde aufweist, welches entlang einer axialen Richtung axial endseitig in einen radial nach außen vom Schraubenbolzen abstehenden Schraubenkopf übergeht. In dieser Ausführungsform ist das Schraubelement mit ihrem Außengewinde in das in der Durchgangsöffnung vorgesehene Innengewinde eingeschraubt. Um die erste Platte des Ölkühlers mittels des Befestigungselements an der Montagewand des Ölfiltermoduls zu fixieren, ist auf einer dem Schraubenkopf gegenüberliegenden Stirnseite des Schraubenbolzens eine Ausnehmung mit einem Innengewinde vorgesehen. Dies erlaubt es, das Schraubelement durch eine in der Montagewand des Ölfiltermoduls vorzusehende Durchgangsöffnung durchzustecken und anschließend durch Einschrauben einer Konterschraube in das in der Ausnehmung vorgesehene Innengewinde die Montagewand an der ersten Platte des Ölkühlers zu fixieren.

Die Erfindung betrifft ferner ein Ölfiltermodul für ein Kraftfahrzeug mit einer eine Montagewand aufweisenden Filtereinheit sowie mit einem vorangehend vorgestellten Ölkühler. Die erste Platte des Ölkühlers liegt an der Montagewand der Montagewand der Filtereinheit an. Zur Fixierung der ersten Platte an der Montagewand ist in jeder zur Aufnahme eines Befestigungselements ausgebildeten Durchgangsöffnung der ersten Platte ein solches Befestigungselement angeordnet. Mittels des Befestigungselements ist die erste Platte des Ölkühlers, insbesondere lösbar, an der Montagewand der Filtereinheit fixiert.

Hierzu kann in einer vorteilhaften Weiterbildung der Erfindung auf der Montagewand für jede Durchgangsöffnung der ersten Platte, die zur Aufnahme eines Befestigungselements ausgebildet ist, eine jeweilige Montagewand-Durchgangsöffnung vorgesehen sein. Die Anordnung der Montagewand-Durchgangsöffnung erfolgt dabei derart, dass in einem an der Montagewand montierten Zustand der ersten Platte jede Montagewand-Durchgangsöffnung mit der ihr zugeordneten Durchgangsöffnung der ersten Platte fluchtet. Somit kann in jeder Montagewand-Durchgangsöffnung ein Befestigungselement in Form eines Schraubelements angeordnet werden, welche die Montagewand-Durchgangsöffnung und die zugeordnete Durchgangsöffnung der ersten Platte durchgreift. Dies geschieht vorzugsweise derart, dass der Schraubenkopf in dem von der ersten und zweiten Platte begrenzten ersten Fluidkanal angeordnet ist und an der ersten Platte anliegt. Ist in den Durchgangsöffnungen der ersten Platte ein jeweiliges Innengewinde vorgesehen, so ist das Schraubelement in dieses Innengewinde eingeschraubt. Ist kein solches Innengewinde vorhanden und das Schraubelement ist bolzenartig, also ohne Außengewinde ausgebildet, so ist das Schraubelement durch die Durchgangsöffnung durchgesteckt. In beiden Fällen ist in das in der Ausnehmung des Schraubenbolzens vorgesehene Innengewinde eine Konterschraube eingeschraubt, so dass die erste Platte flächig gegen die Montagewand gedrückt wird.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: ein Beispiel eines erfindungsgemäßen Ölkühlers in einem Längsschnitt entlang der Schnittlinie I-I der Figur 2,
- Fig. 2: den Ölkühler der Figur 1 in einer Draufsicht auf dessen erste Platte,
- Fig. 3: ein Beispiel eines Befestigungselements des Ölkühlers, mittels welchem der Ölkühler an einem Ölfiltermodul befestigt werden kann.

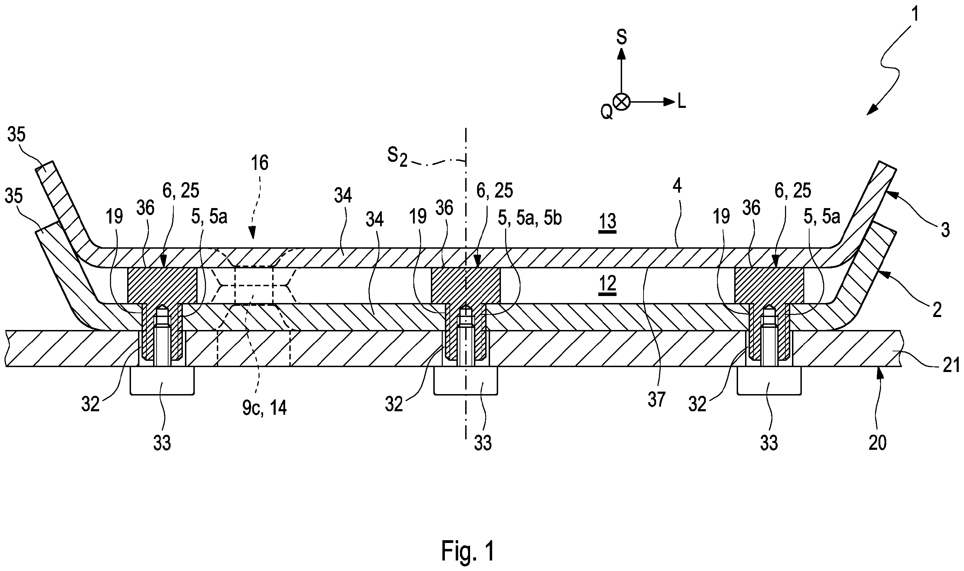

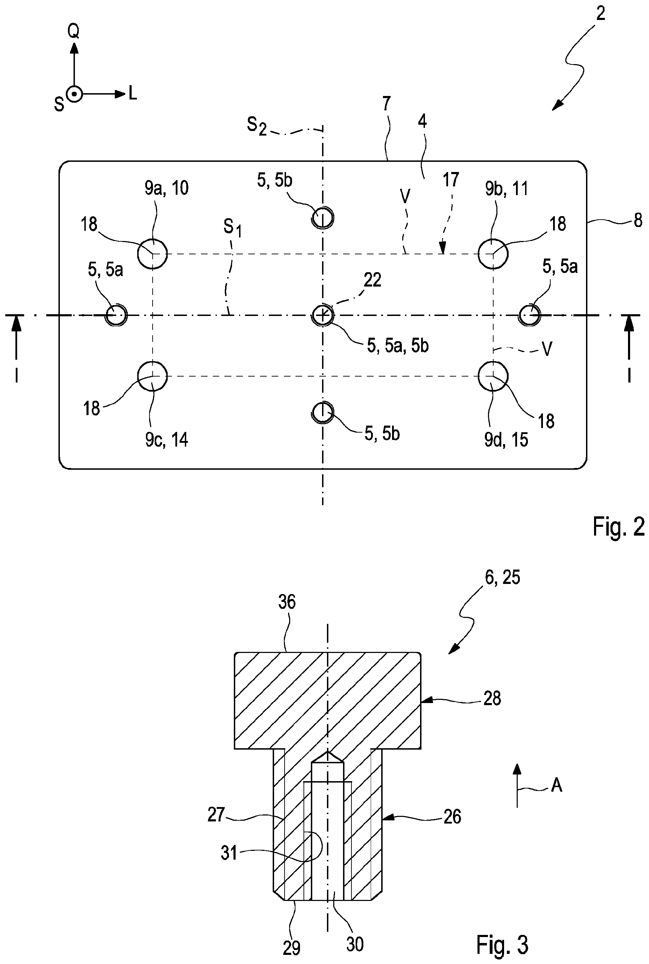

Figur 1 zeigt eine Teilansicht eines erfindungsgemäßen Ölkühlers 1 in einem Längsschnitt. Der Ölkühler 1 umfasst eine erste Platte 2 und mehrere zweite Platten 3, die entlang einer Stapelrichtung S aufeinandergestapelt sind. Im Beispiel der Figur 1 ist der Übersichtlichkeit halber nur eine einzige, und zwar die der ersten Platte 2 benachbarte zweite Platte 3 dargestellt. Die Figur 2 zeigt die erste Platte 2 in einer Draufsicht auf eine der zweiten Platte 3 zugewandten Oberseite 4 entgegen der Stapelrichtung S. Entsprechend Figur 2 ist die erste Platte 2 rechteckförmig mit abgerundeten Ecken realisiert, so dass sich eine erste und eine zweite Symmetrieachse S₁, S₂ ergibt, die orthogonal zueinander verlaufen. Um den Bauraumbedarf für den Ölkühler 1 möglichst klein zu halten, besitzen die erste Platte 2 und wenigstens die der ersten Platte in Stapelrichtung S benachbarte zweite Platte 3 im Wesentlichen dieselben äußeren Abmessungen und somit auch denselben Flächeninhalt. Besonders bevorzugt gilt dies für alle zweiten Platten 3 des Ölkühlers 1.

Den Figuren 1 und 2 entnimmt man, dass in der ersten Platte 2, welche den Ölkühler 1 entlang der Stapelrichtung S begrenzt, fünf Durchgangsöffnungen 5 angeordnet sind. In Varianten des Beispiels kann diese Anzahl variieren. Die Anzahl der in der ersten Platte 2 bereitgestellten Durchgangsöffnungen 5 kann so an verschiedene konstruktive Faktoren wie beispielsweise die Flächengröße der ersten Platte 2, die Steifigkeit der einzelnen Platten 2, 3 des Ölkühlers 1 oder an dessen Eigengewicht angepasst werden. Die Durchgangsöffnungen 5 dienen zur Aufnahme von Befestigungselementen 6, mittels welcher die erste Platte 2 an einer Montagewand 21 eines Ölfiltermoduls 20 oder eines anderen, nicht zum Ölkühler 1 gehörigen Bauteils befestigt werden kann. Durch die Lage der Durchgangsöffnungen 5 werden also Befestigungspunkte zur Befestigung der ersten Platte 2 an der Montagewand 21 definiert.

Wie Figur 2 erkennen lässt, sind die drei zusätzlich mit 5a bezeichneten Durchgangsöffnungen 5 bezüglich der Draufsicht auf die Oberseite 4 der ersten Platte 2 geradlinig entlang einer durch eine Längsseite 7 der ersten Platte 2 definierten Längsrichtung L angeordnet. Die drei zusätzlich mit 5b bezeichneten Durchgangsöffnungen 5 sind geradlinig entlang einer durch eine Querseite 8 der ersten Platte 2 definierte Querrichtung Q angeordnet. Diese Anordnungsgeometrie führt zu einer besonders gleichmäßigen Verteilung der Durchgangsöfffnungen 5 und somit der Befestigungspunkte der ersten Platte 2 an der Montagewand 21, die eine vorteilhafte, flächige Anlage der ersten Platte 2 an die Montagewand 21 unterstützt ist.

Im Beispiel der Figur 2 sind die drei Durchgangsöffnungen 5a auf der ersten Symmetrieachse S₁ und die drei Durchgangsöffnungen 5b auf der zweiten Symmetrieachse S₂ der rechteckförmigen ersten Platte 2 angeordnet. Es ergibt sich ein hochsymmetrischer Aufbau, welcher eine besonders stabile Fixierung der ersten Platte 2 des Ölkühlers 1 an der Montagewand 21 erlaubt. Die in Figur 2 sowohl mit 5a als auch 5b bezeichnete Durchgangsöffnung 5 ist auf dem Schnittpunkt 22 der beiden Symmetrieachsen S₁, S₂ angeordnet. Das heißt, es ergibt sich auch eine kreuzartige Anordnungsgeometrie der Durchgangsöffnungen 5a, 5b. Die im Symmetrieachsen-Schnittpunkt 22 angeordnete Durchgangsöffnung 5 bewirkt eine Befestigung der ersten Platte 2 an der Montagewand 21 in einem zentralen Bereich der ersten Platte 2. Auf diese Weise kann die Stabilität der Befestigung verbessert werden.

Entsprechend der Darstellung der Figur 1 weist jede der Platten 2, 3 jeweils einen Plattenboden 34 auf. Im Plattenboden 34 der ersten Platte 2 sind die Durchgangsöffnungen 5 angeordnet. Jeder Plattenboden 34 wird durch einen den Plattenboden 34 einfassenden Plattenkragen 35, der winkelig vom jeweiligen Plattenboden 34 zur in Stapelrichtung S benachbarten Platte 3 hin absteht, zur jeweiligen Platte 2, 3 komplettiert. In Figur 2 sind die Plattenkrägen 35 der Übersichtlichkeit halber nicht gezeigt. Wenigstens ein Plattenkragen 35, vorzugsweise jeder dieser Plattenkrägen 35, ist mittels einer Lötverbindung stoffschlüssig mit der jeweils benachbarten Platte 3 verbunden. Auf diese Weise lässt sich der Ölkühler 1 mit hoher mechanischer Stabilität sowie in Bauraum sparender Flachbauweise realisieren. Zur weiteren Verbesserung der Steifigkeit des gesamten Aufbaus kann die erste Platte 2 mit einer Plattendicke versehen werden, die größer ist als eine Plattendicke der zweiten Platten 3.

Wie Figur 2 weiter erkennen lässt, sind in der ersten Platte 2 neben den Durchgangsöffnungen 5 auch weitere Durchgangsöffnungen 9 angeordnet. Im Beispiel der Figur 2 sind vier Durchgangsöffnungen 9a-9d vorgesehen. Die beiden Durchgangsöffnungen 9a, 9b dienen als erster Fluideinlass 10 bzw. erster Fluidauslass 11 für ein erstes Fluid, welches das im Ölkühler zu kühlende Öl sein kann. Gemäß der der Darstellung der Figur 1 verbinden der Fluideinlass 10 und der Fluidauslass 11 also einen zwischen der ersten Platte 2 und der der ersten Platte 2 in Stapelrichtung S benachbarten zweiten Platte 3 ausgebildeten ersten Fluidkanal 12 fluidisch mit der Umgebung des Ölkühlers, wenn dieser nicht am Ölfiltermodul 20 befestigt ist. Durch den ersten Fluideinlass 10 kann das vom Ölkühler zu kühlende Öl, aus dem Ölfiltermodul 20 in den ersten Fluidkanal 12 eingeleitet werden. Im ersten Fluidkanal 12 kann das Öl thermisch mit einem in einem zweiten Fluidkanal 13 bereitgestellten zweiten Fluid, etwa einem Kühlmittel, wechselwirken und auf diese Weise abgekühlt werden. Anschließend tritt das Öl durch den ersten Fluidauslass 11 wieder aus dem ersten Fluidkanal 12 aus. Besagter zweiter Fluidkanal 13 wird von den beiden in Stapelrichtung S der ersten Platte 2 benachbarten beiden zweiten Platten 3 (in Figur 1 ist der Übersichtlichkeit halber nur eine zweite Platte 3 dargestellt) begrenzt. Zum Ein- und Ausleiten des Kühlmittels in bzw. aus dem zweiten Fluidkanal 13 dienen die in der ersten Platte 2 vorgesehenen Durchgangsöffnungen 9c, 9d, die für das Kühlmittel als zweiter Fluideinlass 14 bzw. als zweiter Fluidauslass 15 fungieren. Der zweite Fluideinlass 14 und der zweite Fluidauslass 15 sind dabei derart ausgebildet, dass sie den zweiten Fluidkanal 13 fluidisch mit der Umgebung des Ölkühlers 1 verbinden, wenn dieser nicht am Ölfiltermodul 20 befestigt ist. Hierzu können die erste Platte 2 und die zweite Platte 3 im Bereich der Durchgangsöffnungen 9c, 9d domartige gewölbt sein, wie dies in Figur 1 exemplarisch für die Durchgangsöffnung 9c in dem mit dem Bezugszeichen 16 bezeichneten Bereich in gestrichelter Darstellung angedeutet ist. Auf diese Weise kann der zweite Fluidkanal 13 fluidisch unter Überbrückung des ersten Fluidkanals 12 mit der äußeren Umgebung des Ölkühlers 1 verbunden werden.

Betrachtet man nun wieder die Darstellung der Figur 2, so erkennt man, dass die Durchgangsöffnungen 9a-9d in Draufsicht auf die Oberseite in den Eckpunkten 18 eines virtuellen Rechtecks 17 angeordnet sind. Auf diese Weise wird vermieden, dass die an der Position der Fluideinlässe 10, 14 bzw. Fluidauslässe 11, 15 zwangsläufig lokal auftretende Minderung der Steifigkeit der ersten Platte 2 besonders ausgeprägt in einem lokalen Bereich der ersten Platte 2 auftritt. Wie Figur 2 weiter erkennen lässt, sind die zur Aufnahme der Befestigungselemente 6 ausgebildeten Durchgangsöffnungen 5 bezüglich einer virtuellen Verbindungslinie V zwischen zwei benachbarten Durchgangsöffnungen 9a-9d, nach außen zum Rand der ersten Platte 2 hin versetzt angeordnet. Mit anderen Worten, die Befestigungspunkte sind nicht auf der geradlinigen, virtuellen Verbindungslinie V mit zwei benachbarten, einen Fluideinlass 10, 14 oder Fluidauslass 11, 15 ausbildenden Durchgangsöffnungen 9a-9d angeordnet. Auf diese Weise kann eine verbesserte Kraftverteilung der in den Ölkühler 1 beim Fixieren an der Montagewand 21 eingeleiteten Kräfte erreicht werden.

Als Befestigungselemente 6 werden vorzugsweise Schraubelemente 25 in der Art von herkömmlichen Befestigungsschrauben verwendet, die zur Verwendung im hier vorgestellten Ölkühler modifiziert werden können.

Ein solches Schraubelement 25 zeigt in separater Darstellung die Figur 3 in einem Längsschnitt. Das Schraubelement 25 umfasst einen Schraubenbolzen 26, der ein Außengewinde 27 aufweist. Der Schraubenbolzen 26 geht entlang einer axialen Richtung A des Schraubenbolzens 26 axial endseitig in einen radial nach außen vom Schraubenbolzen abstehenden Schraubenkopf 28 über. Mittels des Außengewindes 27 kann das Schraubelement 25 in ein in den Durchgangsöffnungen 5, 5a, 5b der ersten Platte 2 vorgesehenes Innengewinde eingeschraubt werden, welches in Figur 1 nur schematisch angedeutet und mit 19 bezeichnet ist.

Um die erste Platte 2 des Ölkühlers 1 mittels der als Schraubelemente 25 realisierten Befestigungselemente 6 an der Montagewand 21 des Ölfiltermoduls 20 zu fixieren, ist auf einer dem Schraubenkopf 28 gegenüberliegenden Stirnseite 29 des Schraubenbolzens 26 eine Ausnehmung 30 mit einem Innengewinde 31 vorgesehen. Dies erlaubt es, die Schraubelemente 25 durch in der Montagewand 21 des Ölfiltermoduls 20 vorgesehene Montagewand-Durchgangsöffnungen 32 (vgl. Fig. 1) durchzustecken. Durch Einschrauben einer Konterschraube 33 in das in der Ausnehmung 30 vorgesehene Innengewinde 31 wird die Montagewand 21 an der ersten Platte 2 des Ölkühlers 1 gedrückt und auf diese Weise fixiert.

Im Beispielszenario ist in den zur Aufnahme eines jeweiligen Befestigungselements 6 ausgebildeten Durchgangsöffnungen 5, 5a, 5b ein Innengewinde 19 vorgesehen, welches komplementär zu dem am Schraubenbolzen 26 der Schraubelemente 6 vorgesehenen Außengewinde 27 ausgebildet ist. Auf diese Weise können die Befestigungselemente 6 in der ersten Platte 2 vorfixiert werden, bevor die eigentliche Befestigung der ersten Platte 2 des Ölkühlers 1 an der Montagewand 21 des Ölfiltermoduls 20 erfolgt. In einer vereinfachten Variante des Beispiels kann auf die Bereitstellung der Innengewinde 19 in den Durchgangsöffnungen 5 sowie auf die Ausbildung der Außengewinde 27 an den Schraubenbolzen 26 verzichtet sein. Bei dieser Variante ist es denkbar, die Befestigungselemente 6 mittels einer Klebverbindung in den Durchgangsöffnungen 5 vor zu fixieren. Eine solche Klebverbindung bewirkt nicht nur besagte Vorfixierung der Befestigungselemente 6 an der ersten Platte 2, sondern zusätzlich eine Abdichtung des ersten Fluidkanals 12 gegen die äußere Umgebung des Ölkühlers abgedichtet werden. Daher ist es in einer weiterbildenden Variante des Beispiels vorstellbar, auch für den in Figur 1 gezeigten Fall, dass in den Durchgangsöffnungen 5 ein Innengewinde 19 vorgesehen ist, welches mit den am Schraubenbolzen 26 der Befestigungselemente 6 vorgesehenen Außengewinde 27 eine Schraubverbindung bildet, zusätzlich eine Klebverbindung bereitzustellen. Zum Zwecke der Abdichtung sind dem Fachmann neben besagter Klebverbindung auch andere geeignete Maßnahmen bekannt.

Wie Figur 2 anschaulich belegt, weisen die Durchgangsöffnungen 5, 5a, 5b einen kleineren Öffnungsdurchmesser auf als die die Fluideinlässe 10, 14 bzw. Fluidauslässe 11, 15 ausbildenden Durchgangsöffnungen 9a-9d. Auf diese Weise können eine Vielzahl von Durchgangsöffnungen zur Aufnahme von Befestigungselementen 6 und somit eine Vielzahl von Befestigungspunkte realisiert werden.

Wie in Figur 1 gezeigt können die den ersten Fluidkanal 12 begrenzende erste und zweite Platte 2, 3 derart dimensioniert sein, dass eine vom Schraubenbolzen 26 abgewandte Stirnseite 36 des Schraubenkopfs 28 in einem an der Montagewand 21 fixierten Zustand des Ölkühlers 1 an einer der ersten Platte 2 zugewandten Seite 37 der der ersten Platte 2 benachbarten zweiten Platte 3 anliegt. Auf diese Weise wirkt die zweite Platte 3 in Stapelrichtung S als Anschlag auf die Schraubelemente 25 bzw. Befestigungselemente 6. In einer Variante des Beispiels kann die Dimensionierung des Aufbaus auch derart erfolgen, dass ein vorbestimmter Abstand zwischen der Seite 37 der zweiten Platte 3 und der Stirnseite 36 des Schraubenkopfs 38 verbleibt, derart, dass ein Herauslösen des Schraubelements 25 aus der Durchgangsöffnung 5 für den Fall, dass weder eine Schraubverbindung noch eine Klebverbindung vorgesehen ist, ausgeschlossen werden kann (in Figur 1 nicht gezeigt).

## Patentansprüche

1. Ölkühler (1) für ein Ölfiltermodul (20) eines Kraftfahrzeugs,
- mit einer ersten Platte (2) und wenigstens einer zweiten Platte (3), die entlang einer Stapelrichtung (S) übereinander gestapelt sind,
- mit wenigstens einer in der ersten Platte (2) vorgesehenen Durchgangsöffnung (5, 5a, 5b) zur Aufnahme eines Befestigungselements (6), mittels welchem die erste Platte (2) an einer Montagewand (21), insbesondere eines Ölfiltermoduls (20), befestigbar ist,
- wobei das Befestigungselement (6) als Schraubelement (25) ausgebildet ist, welches einen Schraubenbolzen (26) mit einem Außengewinde (27) umfasst, der axial endseitig in einen radial nach außen vom Schraubenbolzen (26) abstehenden Schraubenkopf (28) übergeht,
**dadurch gekennzeichnet, dass**
die erste und zweite Platte (2, 3), die den ersten Fluidkanal (12) begrenzen, derart dimensioniert sind, dass eine vom Schraubenbolzen (26) abgewandte Stirnseite (36) des Schraubenkopfs (28) in einem an der Montagewand (21) fixierten Zustand des Ölkühlers (1) an einer der ersten Platte (2) zugewandten Seite (37) der der ersten Platte (2) benachbarten zweiten Platte (3) anliegt.

2. Ölkühler nach Anspruch 1,
**dadurch gekennzeichnet, dass**
- wenigstens vier Durchgangsöffnungen (5, 5a, 5b) in der ersten Platte (2) vorgesehen sind,
- die erste Platte (2) und wenigstens die der ersten Platte (2) in Stapelrichtung (S) benachbarte zweite Platte (3), insbesondere alle zweiten Platten (3), im Wesentlichen dieselben äußeren Abmessungen aufweisen.

3. Ölkühler nach Anspruch 1 oder 2,
**dadurch gekennzeichnet, dass**
- wenigstens zwei Durchgangsöffnungen (5, 5a) bezüglich einer Draufsicht auf eine der zweiten Platte (3) zugewandte Oberseite (4) der ersten Platte (2) im Wesentlichen geradlinig entlang einer durch eine Längsseite (7) der ersten Platte (2) definierten Längsrichtung (L) angeordnet sind,
- wenigstens zwei Durchgangsöffnungen (5, 5b) bezüglich der Draufsicht auf die Oberseite (4) im Wesentlichen geradlinig entlang einer quer zur Längsrichtung (L) verlaufenden Querrichtung (Q) angeordnet sind.

4. Ölkühler nach Anspruch 3,
**dadurch gekennzeichnet, dass**
wenigstens fünf, insbesondere genau fünf, Durchgangsöffnungen (5, 5a, 5b) vorgesehen sind, von welchen wenigstens drei Durchgangsöffnungen (5, 5a) geradlinig entlang der Längsrichtung (L) und wenigstens drei Durchgangsöffnungen (5, 5b) geradlinig entlang der Querrichtung (Q) angeordnet sind.

5. Ölkühler nach einem der vorhergehenden Ansprüche,
**dadurch gekennzeichnet, dass**
die erste Platte (2) eine Plattendicke aufweist, die größer ist als eine Plattendicke der wenigstens einen zweiten Platte (3).

6. Ölkühler nach einem der vorhergehenden Ansprüche,
**dadurch gekennzeichnet, dass**
- die erste Platte (2) bezüglich der Draufsicht auf die Oberseite (4) im Wesentlichen rechteckförmig mit einer ersten und einer zweiten Symmetrieachse (S₁, S₂) ausgebildet ist,
- die Durchgangsöffnungen (5a, 5b) auf der ersten und/oder auf der zweiten Symmetrieachse (S₁, S₂) angeordnet sind.

7. Ölkühler nach Anspruch 6,
**dadurch gekennzeichnet, dass**
eine Durchgangsöffnung (5, 5a, 5b) auf dem Schnittpunkt (22) der beiden Symmetrieachsen (S₁, S₂) angeordnet ist, so dass sich in Draufsicht auf die Oberseite (4) eine kreuzartige Anordnungsgeometrie der Durchgangsöffnungen (5, 5a, 5b) ergibt.

8. Ölkühler nach einem der vorhergehenden Ansprüche,
**dadurch gekennzeichnet, dass**
- in der ersten Platte (2) ein als Durchgangsöffnung (9a) ausgebildeter erster Fluideinlass (10) und ein als Durchgangsöffnung (9b) ausgebildeter erster Fluidauslass (1) für ein erstes Fluid angeordnet sind, welche einen ersten Fluidkanal (12), der zwischen der ersten Platte (2) und der der ersten Platte (2) in Stapelrichtung (S) benachbarten zweiten Platte (3) ausgebildet ist, fluidisch mit der äußeren Umgebung des Ölkühlers (1) verbinden,
- in der ersten Platte (2) ein als Durchgangsöffnung (9c) ausgebildeter zweiter Fluideinlass (14) und ein als Durchgangsöffnung (9d) ausgebildeter zweiter Fluidauslass (15) für ein zweites Fluid vorgesehen sind, welche derart eingerichtet sind, dass sie einen zweiten Fluidkanal (13), der zwischen der der ersten Platte (2) benachbarten, zweiten Platte (3) und einer dieser zweiten Platte (3) in Stapelrichtung (S) benachbarten weiteren zweiten Platte (3) ausgebildeten zweiten Fluidkanal (13) fluidisch mit der äußeren Umgebung des Ölkühlers (1) verbinden.

9. Ölkühler nach Anspruch 8,
**dadurch gekennzeichnet, dass**
die beiden die Fluideinlässe (10, 14) bildenden Durchgangsöffnungen (9a, 9c) und die beiden die Fluidauslässe (11, 15) bildenden Durchgangsöffnungen (9b, 9d) in Draufsicht auf die Oberseite (4) der ersten Platte (2) in den Eckpunkten eines virtuellen Rechtecks (17) angeordnet sind.

10. Ölkühler nach Anspruch 9,
**dadurch gekennzeichnet, dass**
das virtuelle Rechteck (17) derart auf der Oberseite (4) der ersten Platte (2) angeordnet ist, dass auf einer virtuellen Verbindungslinie (V) zwischen zwei Durchgangsöffnungen (9a-9d), die einen Fluideinlass (10, 14) oder einen Fluidauslass (11, 15) ausbilden, keine Durchgangsöffnung (5, 5a, 5b) angeordnet ist, die zur Aufnahme eines Befestigungselements (6) dient.

11. Ölkühler nach einem der Ansprüche 8 bis 10,
**dadurch gekennzeichnet, dass**
die Durchgangsöffnungen (5, 5a, 5b), die zur Aufnahme eines Befestigungselements (6) ausgebildet sind, bezüglich einer virtuellen Verbindungslinie (V) zwischen zwei benachbarten, einen Fluideinlass (10, 14) oder einen Fluidauslass (11, 15) ausbildenden Durchgangsöffnungen (9a-9d), nach außen, zum äußeren Rand der ersten Platte (2) hin versetzt angeordnet sind.

12. Ölkühler nach einem der vorhergehenden Ansprüche,
**dadurch gekennzeichnet, dass**
in den Durchgangsöffnungen (5, 5a, 5b), die zur Aufnahme eines Befestigungselements (6) ausgebildet sind, jeweils ein Innengewinde (19) vorgesehen ist.

13. Ölkühler nach einem der Ansprüche 8 bis 12,
**dadurch gekennzeichnet, dass**
die zur Aufnahme eines Befestigungselements (6) ausgebildeten Durchgangsöffnungen (5, 5a, 5b) einen kleineren Öffnungsdurchmesser besitzen als die die Fluideinlässe (10, 14) bzw. Fluidauslässe (11, 15) ausbildenden Durchgangsöffnungen (9a-9d).

14. Ölkühler nach einem der vorhergehenden Ansprüche,
**dadurch gekennzeichnet, dass**
- jede Platte (2, 3) jeweils einen Plattenboden (34) aufweist, in welchem im Falle der ersten Platte (2) die Durchgangsöffnungen (5, 5a, 5b) angeordnet sind, und einen den Plattenboden (34) einfassenden Plattenkragen (35) aufweist, der vom jeweiligen Plattenboden (34) zur benachbarten Platte (3) hin absteht,
- wenigsten ein, vorzugsweise jeder, Plattenkragen (35), stoffschlüssig, insbesondere mittels einer Lötverbindung, mit der ihm benachbarten Platte (3) verbunden ist.

15. Ölkühler nach einem der vorhergehenden Ansprüche,
**dadurch gekennzeichnet, dass**
- in jeder zur Aufnahme eines Befestigungselements (6) ausgebildeten Durchgangsöffnung (5, 5a, 5b) ein solches Befestigungselement (6) aufgenommen, insbesondere mittels einer Schraub- und/oder Klebverbindung fixiert, ist.

16. Ölkühler nach Anspruch 15, wenn rückbezogen auf einen der Ansprüche 12 bis 14,
**dadurch gekennzeichnet, dass**
- das Befestigungselement (6) ein Schraubelement (25) mit einem Schraubenbolzen (26) ist, der ein Außengewinde (27) aufweist, welches entlang einer axialen Richtung (A) axial endseitig in einen radial nach außen vom Schraubenbolzen (26) abstehenden Schraubenkopf (28) übergeht,
- das Schraubelement (25) mit seinem Außengewinde (27) in das in der Durchgangsöffnung (5, 5a, 5b) der ersten Platte (2) vorgesehene Innengewinde (19) eingeschraubt ist,
- auf einer dem Schraubenkopf (28) gegenüberliegenden Stirnseite (29) des Schraubenbolzens (26) eine Ausnehmung (30) mit einem Innengewinde (31) vorgesehen ist.

17. Ölfiltermodul (20) für ein Kraftfahrzeug,
- mit einer eine Montagewand (21) aufweisenden Filtereinheit,
- mit einem Ölkühler (1) nach einem der vorhergehenden Ansprüche, dessen erste Platte (2) flächig an der Montagewand (21) der Filtereinheit anliegt,
- wobei in wenigstens einer zur Aufnahme eines Befestigungselements (6) ausgebildeten Durchgangsöffnung (5, 5a, 5b) ein solches, als Schraubelement (25) ausgebildetes Befestigungselement (6) angeordnet ist, mittels welchem die erste Platte (2) des Ölkühlers (1), insbesondere lösbar, an der Montagewand (21) der Filtereinheit fixiert ist.

18. Ölfiltermodul nach Anspruch 17,
**dadurch gekennzeichnet, dass**
- auf der Montagewand (21) für jede Durchgangsöffnung (5, 5a, 5b) der ersten Platte (2), die zur Aufnahme eines Befestigungselements (6) ausgebildet ist, eine jeweilige Montagewand-Durchgangsöffnung (32) vorgesehen ist, wobei in einem an der Montagewand (21) montierten Zustand der ersten Platte (2) jede Montagewand-Durchgangsöffnung (32) mit der ihr zugeordneten Durchgangsöffnung (5, 5a, 5b) der ersten Platte (2) fluchtet,
- in jeder Montagewand-Durchgangsöffnung (32) ein als Schraubelement (25) ausgebildetes Befestigungselement (6) angeordnet ist, welche die Montagewand-Durchgangsöffnung (32) und die dieser zugeordnete Durchgangsöffnung (5, 5a, 5b) der ersten Platte (2) durchgreift,
- der Schraubenkopf (28) des Schraubelements (25) in dem von der ersten und zweiten Platte (2, 3) begrenzten ersten Fluidkanal (12) angeordnet ist und an der ersten Platte (2) anliegt,
- in das in der Ausnehmung (30) des Schraubenbolzens (26) vorgesehene Innengewinde (31) eine Konterschraube (33) eingeschraubt ist, so dass die erste Platte (2) flächig gegen die Montagewand (21) gedrückt ist.

19. Ölfiltermodul nach Anspruch 18,
**dadurch gekennzeichnet, dass**
eine vom Schraubenbolzen (26) abgewandte Stirnseite (36) des Schraubenkopfs (28) in einem an der Montagewand (21) fixierten Zustand des Ölkühlers (1)) an einer der ersten Platte (2) zugewandten Seite (37) der der ersten Platte (2) benachbarten zweiten Platte (3) anliegt.

## Claims

1. Oil cooler (1) for an oil filter module (20) of a motor vehicle,
- having a first plate (2) and at least a second plate (3) which are stacked one above the other in a stacking direction (S),
- having at least one through-opening (5, 5a, 5b) which is provided in the first plate (2) for receiving a securing element (6) by means of which the first plate (2) can be secured to an assembly wall (21), in particular of an oil filter module (20),
- wherein the securing element (6) is constructed as a screw element (25) which comprises a screw bolt (26) which has an outer thread (27) and which merges axially at the end side into a screw head (28) which protrudes radially outwards from the screw bolt (26),
**characterised in that**
the first and the second plates (2, 3) which delimit the first fluid channel (12) are sized in such a manner that an end side (36) of the screw head (28) facing away from the screw bolt (26) in a state in which the oil cooler (1) is fixed to the assembly wall (21) is in abutment with a side (37) of the second plate (3) which is adjacent to the first plate (2), which side (37) faces the first plate (2).

2. Oil cooler according to claim 1,
**characterised in that**
- at least four through-openings (5, 5a, 5b) are provided in the first plate (2),
- the first plate (2) and at least the second plate (3) which is adjacent to the first plate (2) in the stacking direction (S), in particular all the second plates (3), have substantially the same external dimensions.

3. Oil cooler according to claim 1 or 2,
**characterised in that**
- at least two through-openings (5, 5a) with respect to a plan view of an upper side (4) of the first plate (2) facing the second plate (3) are arranged in a substantially linear manner in a longitudinal direction (L) defined by a longitudinal side (7) of the first plate (2),
- at least two through-openings (5, 5b) with respect to the plan view of the upper side (4) are arranged in a substantially linear manner in a transverse direction (Q) which extends transversely relative to the longitudinal direction (L).

4. Oil cooler according to claim 3,
**characterised in that**
at least five, in particular precisely five, through-openings (5, 5a, 5b) are provided, of which at least three through-openings (5, 5a) are arranged in a linear manner in the longitudinal direction (L) and at least three through-openings (5, 5b) are arranged in a linear manner in the transverse direction (Q).

5. Oil cooler according to any one of the preceding claims,
**characterised in that**
the first plate (2) has a plate thickness which is greater than a plate thickness of the at least one second plate (3).

6. Oil cooler according to any one of the preceding claims,
**characterised in that**
- the first plate (2) with respect to the plan view of the upper side (4) is constructed in a substantially rectangular manner with a first and a second axis of symmetry (S₁, S₂),
- the through-openings (5a, 5b) are arranged on the first and/or on the second axis of symmetry (S₁, S₂).

7. Oil cooler according to claim 6,
**characterised in that**
a through-opening (5, 5a, 5b) is arranged on the intersection (22) of the two axes of symmetry (S₁, S₂) so that as a plan view of the upper side (4) a cross-like arrangement geometry of the through-openings (5, 5a, 5b) is produced.

8. Oil cooler according to any one of the preceding claims,
**characterised in that**
- there are arranged in the first plate (2) a first fluid inlet (10) which is constructed as a through-opening (9a) and a first fluid outlet (1) which is constructed as a through-opening (9b) for a first fluid, which connect a first fluid channel (12) which is constructed between the first plate (2) and the second plate (3) which is adjacent to the first plate (2) in the stacking direction (S) in fluid terms to the external environment of the oil cooler (1),
- there are provided in the first plate (2) a second fluid inlet (14) which is constructed as a through-opening (9c) and a second fluid outlet (15) which is constructed as a through-opening (9d) for a second fluid, which are configured in such a manner that they connect a second fluid channel (13) which between the second plate (3) which is adjacent to the first plate (2) and an additional second plate (3) which is adjacent to this second plate (3) in the stacking direction (S) constructed second fluid channel (3) in fluid terms to the external environment of the oil cooler (1).

9. Oil cooler according to claim 8,
**characterised in that**
the two through-openings (9a, 9c) which form the fluid inlets (10,14) and the two through-openings (9b, 9d) which form the fluid outlets (11, 15) as a plan view of the upper side (4) of the first plate (2) are arranged at the corner locations of a virtual rectangle (17).

10. Oil cooler according to claim 9,
**characterised in that**
the virtual rectangle (17) is arranged on the upper side (4) of the first plate (2) in such a manner that on a virtual connection line (V) between two through-openings (9a-9d) which form a fluid inlet (10, 14) or a fluid outlet (11, 15) there is arranged no through-opening (5, 5a, 5b) which serves to receive a securing element (6).

11. Oil cooler according to any one of claims 8 to 10,
**characterised in that**
the through-openings (5, 5a, 5b) which are constructed to receive a securing element (6) are arranged with respect to a virtual connection line (V) between two adjacent through-openings (9a-9d) which form a fluid inlet (10, 14) or a fluid outlet (11, 15) so as to be offset outwards towards the outer edge of the first plate (2).

12. Oil cooler according to any one of the preceding claims,
**characterised in that**
an inner thread (19) is provided in the through-openings (5, 5a, 5b) which are constructed to receive a securing element (6).

13. Oil cooler according to any one of claims 8 to 12,
**characterised in that**
the through-openings (5, 5a, 5b) which are constructed to receive a securing element (6) have a smaller opening diameter than the through-openings (9a-9d) which form the fluid inlets (10, 14) or fluid outlets (11, 15).

14. Oil cooler according to any one of the preceding claims,
**characterised in that**
- each plate (2, 3) has a plate base (34), in which in the case of the first plate (2) the through-openings (5, 5a, 5b) are arranged, and has a plate collar (35) which surrounds the plate base (34) and which protrudes from the respective plate base (34) towards the adjacent plate (3),
- at least one, preferably each, plate collar (35) is connected in a materially engaging manner, in particular by means of a solder connection, to the plate (3) adjacent thereto.

15. Oil cooler according to any one of the preceding claims,
**characterised in that**
- in each through-opening (5, 5a, 5b) which is constructed to receive a securing element (6), such a securing element (6) is received, in particular fixed by means of a screw and/or an adhesive connection.

16. Oil cooler according to claim 15 when dependent on one of claims 12 to 14,
**characterised in that**
- the securing element (6) is a screw element (25) having a screw bolt (26) which has an outer thread (27) which merges in an axial direction (A) axially at the end side into a screw head (28) which protrudes radially outwards from the screw bolt (26),
- the screw element (25) is screwed with the outer thread (27) thereof into the inner thread (19) which is provided in the through-opening (5, 5a, 5b) of the first plate (2),
- at an end side (29) of the screw bolt (26) opposite the screw head (28) a recess (30) with an inner thread (31) is provided.

17. Oil filter module (20) for a motor vehicle,
- having a filter unit which has an assembly wall (21),
- having an oil cooler (1) according to any one of the preceding claims whose first plate (2) is in planar abutment with the assembly wall (21) of the filter unit,
- wherein in at least one through-opening (5, 5a, 5b) which is constructed to receive a securing element (6) there is arranged such a securing element (6) which is constructed as a screw element (25) and by means of which the first plate (2) of the oil cooler (1) is fixed, in particular in a releasable manner, to the assembly wall (21) of the filter unit.

18. Oil filter module according to claim 17,
**characterised in that**
- in the assembly wall (21) for each through-opening (5, 5a, 5b) of the first plate (2) which is constructed to receive a securing element (6) there is provided a respective assembly wall through-opening (32), wherein, in a state in which the first plate (2) is mounted on the assembly wall (21), each assembly wall through-opening (32) is in alignment with the through-opening (5, 5a, 5b) of the first plate (2) which is associated therewith,
- in each assembly wall through-opening (32) there is arranged a securing element (6) which is constructed as a screw element (25) and which engages through the assembly wall through-opening (32) and the through-opening (5, 5a, 5b) of the first plate (2) which is associated therewith,
- the screw head (28) of the screw element (25) is arranged in the first fluid channel (12) delimited by the first and second plates (2, 3) and is in abutment with the first plate (2),
- a counter-screw (33) is screwed in the inner thread (31) which is provided in the recess (30) of the screw bolt (26) so that the first plate (2) is pressed in a planar manner against the assembly wall (21).

19. Oil filter module according to claim 18,
**characterised in that**
an end side (36) of the screw head (28) facing away from the screw bolt (26) in a state in which the oil cooler (1) is fixed to the assembly wall (21) is in abutment with a side (37) of the second plate (3) which is adjacent to the first plate (2), which side (37) faces the first plate (2).

## Revendications

1. Refroidisseur d'huile (1) pour un module de filtre à huile (20) d'un véhicule automobile,
- avec une première plaque (2) et au moins une deuxième plaque (3), qui sont empilées l'une sur l'autre le long d'une direction d'empilement (S),
- avec au moins une ouverture de passage (5, 5a, 5b) prévue dans la première plaque (2) et destinée à loger un élément de fixation (6) au moyen duquel la première plaque (2) peut être fixée à une paroi de montage (21), en particulier d'un module de filtre à huile (20),
- dans lequel l'élément de fixation (6) est réalisé sous forme d'élément à visser (25) qui comprend un boulon (26) qui est muni d'un filetage extérieur (27) et qui se transforme à une extrémité axiale en une tête de vis (28) dépassant de façon radiale du boulon (26) vers l'extérieur,
**caractérisé en ce que** la première et la deuxième plaque (2, 3) qui délimitent le premier canal de fluide (12) sont dimensionnées de telle sorte qu'un côté frontal (36), éloigné du boulon (26), de la tête de vis (28) s'appuie, lorsque le refroidisseur d'huile (1) est fixé à la paroi de montage (21), contre un côté (37), proche de la première plaque (2), de la deuxième plaque (3) voisine de la première plaque (2).

2. Refroidisseur d'huile selon la revendication 1, **caractérisé en ce que**
- au moins quatre ouvertures de passage (5, 5a, 5b) sont prévues dans la première plaque (2),
- la première plaque (2) et au moins la deuxième plaque (3) voisine de la première plaque (2) dans la direction d'empilement (S), en particulier toutes les deuxièmes plaques (3), présentent sensiblement les mêmes dimensions extérieures.

3. Refroidisseur d'huile selon la revendication 1 ou 2, **caractérisé en ce que**
- par rapport à une vue de dessus d'une face supérieure (4), proche de la deuxième plaque (3), de la première plaque (2), au moins deux ouvertures de passage (5, 5a) sont agencées sensiblement de manière rectiligne le long d'une direction longitudinale (L) définie par un côté long (7) de la première plaque (2),
- par rapport à la vue de dessus de la face supérieure (4), au moins deux ouvertures de passage (5, 5b) sont agencées sensiblement de manière rectiligne le long d'une direction transversale (Q) s'étendant transversalement à la direction longitudinale (L).

4. Refroidisseur d'huile selon la revendication 3, **caractérisé en ce qu'**il est prévu au moins cinq, de préférence exactement cinq, ouvertures de passage (5, 5a, 5b) parmi lesquelles au moins trois ouvertures de passage (5, 5a) sont agencées de manière rectiligne le long de la direction longitudinale (L) et au moins trois ouvertures de passage (5, 5b) sont agencées de manière rectiligne le long de la direction transversale (Q).

5. Refroidisseur d'huile selon l'une quelconque des revendications précédentes, **caractérisé en ce que** la première plaque (2) présente une épaisseur de plaque qui est supérieure à une épaisseur de plaque de l'au moins une deuxième plaque (3).

6. Refroidisseur d'huile selon l'une quelconque des revendications précédentes, **caractérisé en ce que**
- par rapport à la vue de dessus de la face supérieure (4), la première plaque (2) est réalisée sensiblement rectangulaire avec un premier et un deuxième axe de symétrie (S₁, S₂),
- les ouvertures de passage (5a, 5b) sont agencées sur le premier et/ou sur le deuxième axe de symétrie (S₁, S₂).

7. Refroidisseur d'huile selon la revendication 6, **caractérisé en ce qu'**une ouverture de passage (5, 5a, 5b) est agencée au point d'intersection (22) des deux axes de symétrie (S₁, S₂) de telle sorte qu'il en résulte dans la vue de dessus de la face supérieure (4) une géométrie croisée d'agencement des ouvertures de passage (5, 5a, 5b).

8. Refroidisseur d'huile selon l'une quelconque des revendications précédentes, **caractérisé en ce que**
- dans la première plaque (2) sont agencées pour un premier fluide une première entrée de fluide (10) réalisée sous forme d'ouverture de passage (9a) et une première sortie de fluide (1) réalisée sous forme d'ouverture de passage (9b), lesquelles ouvertures de passage relient pour le fluide un premier canal de fluide (12), qui est réalisé entre la première plaque (2) et la deuxième plaque (3) voisine de la première plaque (2) dans la direction d'empilement (S), à l'environnement extérieur du refroidisseur d'huile (1),
- dans la première plaque (2) sont prévues pour un deuxième fluide une deuxième entrée de fluide (14) réalisée sous forme d'ouverture de passage (9c) et une deuxième sortie de fluide (15) réalisée sous forme d'ouverture de passage (9d), lesquelles ouvertures de passage sont conçues de telle sorte qu'elles relient pour le fluide un deuxième canal de fluide (13), le deuxième canal de fluide (13) réalisé entre la deuxième plaque (3) voisine de la première plaque (2) et une autre deuxième plaque (3) voisine de cette deuxième plaque (3) dans la direction d'empilement (S), à l'environnement extérieur du refroidisseur d'huile (1).

9. Refroidisseur d'huile selon la revendication 8, **caractérisé en ce que**, dans la vue de dessus de la face supérieure (4) de la première plaque (2), les deux ouvertures de passage (9a, 9c) formant les entrées de fluide (10, 14) et les deux ouvertures de passage (9b, 9d) formant les sorties de fluide (11, 15) sont agencées dans les angles d'un rectangle virtuel (17).

10. Refroidisseur d'huile selon la revendication 9, **caractérisé en ce que** le rectangle virtuel (17) est agencé de telle manière sur la face supérieure (4) de la première plaque (2) qu'aucune ouverture de passage (5, 5a, 5b) servant à loger un élément de fixation (6) n'est agencée sur une ligne de liaison virtuelle (V) entre deux ouvertures de passage (9a-9d) qui forment une entrée de fluide (10, 14) ou une sortie de fluide (11, 15).

11. Refroidisseur d'huile selon l'une quelconque des revendications 8 à 10, **caractérisé en ce que** les ouvertures de passage (5, 5a, 5b) qui sont réalisées pour loger un élément de fixation (6) sont agencées décalées vers l'extérieur, vers le bord extérieur de la première plaque (2), par rapport à une ligne de liaison virtuelle (V) entre deux ouvertures de passage (9a-9d) voisines formant une entrée de fluide (10, 14) ou une sortie de fluide (11, 15).

12. Refroidisseur d'huile selon l'une quelconque des revendications précédentes, **caractérisé en ce que**, dans les ouvertures de passage (5, 5a, 5b) qui sont réalisées pour loger un élément de fixation (6), il est prévu à chaque fois un filetage intérieur (19).

13. Refroidisseur d'huile selon l'une quelconque des revendications 8 à 12, **caractérisé en ce que** les ouvertures de passage (5, 5a, 5b) réalisées pour loger un élément de fixation (6) ont un plus petit diamètre d'ouverture que les ouvertures de passage (9a-9d) formant les entrées de fluide (10, 14) ou les sorties de fluide (11, 15).

14. Refroidisseur d'huile selon l'une quelconque des revendications précédentes, **caractérisé en ce que**
- chaque plaque (2, 3) comporte un fond de plaque (34), dans lequel les ouvertures de passage (5, 5a, 5b) sont agencées dans le cas de la première plaque (2), et comporte un rebord de plaque (35) qui entoure le fond de plaque (34) et qui dépasse du fond de plaque (34) respectif en direction de la plaque (3) voisine,
- au moins un rebord de plaque (35) et de préférence chaque rebord de plaque est relié par de la matière, en particulier au moyen d'une liaison par brasage, à la plaque (3) qui lui est voisine.

15. Refroidisseur d'huile selon l'une quelconque des revendications précédentes, **caractérisé en ce que**
- dans chaque ouverture de passage (5, 5a, 5b) réalisée pour loger un élément de fixation (6) est logé un tel élément de fixation (6), fixé en particulier au moyen d'un assemblage vissé et/ou collé.

16. Refroidisseur d'huile selon la revendication 15 dans la mesure où elle est considérée comme dépendante de l'une quelconque des revendications 12 à 14, **caractérisé en ce que**
- l'élément de fixation (6) comporte un élément à visser (25) avec un boulon (26) qui comporte un filetage extérieur (27) qui se transforme le long d'une direction axiale (A), à son extrémité axiale, en une tête de vis (28) dépassant de façon radiale du boulon (26) vers l'extérieur,
- l'élément à visser (25) est vissé avec son filetage extérieur (27) dans le filetage intérieur (19) prévu dans l'ouverture de passage (5, 5a, 5b) de la première plaque (2),
- un évidement (30) avec un filetage intérieur (31) est prévu sur un côté frontal (29) du boulon (26) à l'opposé de la tête de vis (28).

17. Module de filtre à huile (20) pour un véhicule automobile,
- avec une unité de filtre comportant une paroi de montage (21),
- avec un refroidisseur d'huile (1) selon l'une quelconque des revendications précédentes dont la première plaque (2) s'appuie par sa surface à la paroi de montage (21) de l'unité de filtre,
- dans lequel, dans au moins une ouverture de passage (5, 5a, 5b) réalisée pour loger un élément de fixation (6), est agencé un tel élément de fixation (6) qui est réalisé sous forme d'élément à visser (25) et au moyen duquel la première plaque (2) du refroidisseur d'huile (1) est fixée, en particulier de manière amovible, à la paroi de montage (21) de l'unité de filtre.

18. Module de filtre à huile selon la revendication 17, **caractérisé en ce que**
- sur la paroi de montage (21), il est prévu pour chaque ouverture de passage (5, 5a, 5b) de la première plaque (2) qui est réalisée pour loger un élément de fixation (6) une ouverture de passage de paroi de montage (32) respective, chaque ouverture de passage de paroi de montage (32) étant alignée avec celle des ouvertures de passage (5, 5a, 5b) de la première plaque (2) qui lui est associée lorsque la première plaque (2) est montée sur la paroi de montage (21),
- dans chaque ouverture de passage de paroi de montage (32) est agencé un élément de fixation (6) qui est réalisé sous forme d'élément à visser (25) et qui passe à travers l'ouverture de passage de paroi de montage (32) et celle des ouvertures de passage (5, 5a, 5b) de la première plaque (2) qui lui est associée,
- la tête de vis (28) de l'élément à visser (25) est agencée dans le premier canal de fluide (12) délimité par la première et la deuxième plaque (2, 3) et s'appuie contre la première plaque (2),
- une contre-vis (33) est vissée dans le filetage intérieur (31) prévu dans l'évidement (30) du boulon (26) de telle sorte que la première plaque (2) est poussée sur toute sa surface contre la paroi de montage (21).

19. Module de filtre à huile selon la revendication 18, **caractérisé en ce qu'**un côté frontal (36), éloigné du boulon (26), de la tête de vis (28) s'appuie contre un côté (37), proche de la première plaque (2), de la deuxième plaque (3) voisine de la première plaque (2) lorsque le refroidisseur d'huile (1) est fixé à la paroi de montage (21).
